Europäisches Patentamt

European Patent Office

Office européen des brevets

(19)

(11) Veröffentlichungsnummer: **0 260 454 B1**

(12) **EUROPÄISCHE PATENTSCHRIFT**

(45) Veröffentlichungstag der Patentschrift: **04.03.92**

(51) Int. Cl.⁵: **C08L 25/02**

(21) Anmeldenummer: **87111940.0**

(22) Anmeldetag: **18.08.87**

(54) **Thermoplastische Formmasse.**

(30) Priorität: **19.08.86 DE 3628092**

(43) Veröffentlichungstag der Anmeldung:
**23.03.88 Patentblatt 88/12**

(45) Bekanntmachung des Hinweises auf die
Patenterteilung:
**04.03.92 Patentblatt 92/10**

(84) Benannte Vertragsstaaten:
**BE DE FR GB NL**

(56) Entgegenhaltungen:
**DE-A- 1 694 886**
**FR-A- 2 348 948**
**GB-A- 2 003 891**

(73) Patentinhaber: **BASF Aktiengesellschaft**
**Carl-Bosch-Strasse 38**
**W-6700 Ludwigshafen(DE)**

(72) Erfinder: **Hoenl, Hans, Dr.**
**Hauptstrasse 69 a**
**W-6719 Obersuelzen(DE)**

EP 0 260 454 B1

## Beschreibung

Die Erfindung betrifft eine thermoplastische Formmasse, enthaltend, jeweils bezogen auf die Formmasse aus A + B

A   ein Styrol oder substituiertes Styrol enthaltendes Polymerisat

B   ein lineares, hydriertes Styrol und Butadien enthaltendes Blockcopolymerisat.

Zum Stand der Technik nennen wir:

(1) DE-OS 16 94 886.

Die Zugabe von Styrol-Butadien-Blockcopolymerisaten zu Polystyrol zwecks Verbesserung der Schlagzähigkeit ist eine altbekannte Maßnahme.

In (1) wird die Zugabe von hydrierten Styrol-Butadien-Styrol-3-Blockcopolymerisaten zu Polystyrol beschrieben.

Leider ist die Verbesserung der Schlagzähigkeit bie Zusatz z.B. der aus (1) bekannten Produkte nicht immer genügend und es tritt oft noch ein Abfall der Steifigkeit auf. Es galt daher, Zusätze für Polystyrol und schlagfestes Polystyrol zu finden, die eine verbesserte Schlagzähigkeit unter Beibehaltung der Steifigkeit zur Folge haben.

Diese Aufgabe wird gelöst durch eine Formmasse gemäß Anspruch 1.

Die Erfindung betrifft daher eine thermoplastische Formmasse, enthaltend, jeweils bezogen auf die Formmasse aus A + B,

A   98 bis 80 Gew.% mindestens eines Styrol oder eines substituiertes Styrol enthaltenden Polymerisates

B   2 bis 20 Gew.% mindestens eines linearen, hydrierten Styrol und Butadien enthaltenden Blockcopolymerisates.

Die Formmasse ist dadurch gekennzeichnet, daß der Gesamtstyrolgehalt des Blockcopolymerisates im Bereich von 40 bis 60 Gew.%, bezogen auf B, liegt und daß 5 bis 25 Gew.% des Blockcopolymerisates B als Blockpolystyrol vorliegen und der Rest des Styrols in 60 bis 40 Gew.% hydriertes Butadien statistisch eingebaut vorliegt, wobei das Blockcopolymerisat B ein mittleres Molekulargewicht (Gewichtsmittel) von 50.000 bis 200.000 aufweist.

Nachstehend werden der Aufbau der erfindungsgemäßen Formmasse aus den Komponenten, die Herstellung der Komponenten und die der Formmasse beschrieben.

Die Formmasse enthält die Komponenten A und B; vorzugsweise besteht sie aus diesen.

Ferner kann die Formmasse als Komponente C übliche Zusatzstoffe enthalten.

Bezogen auf die Formmasse aus A + B enthält sie:

A:   98 bis 80 Gew.%, vorzugsweise 96 bis 86 Gew.%

B:   2 bis 20 Gew.%, vorzugsweise 4 bis 14 Gew.%.

Bezogen auf 100 Gew.Teile A + B, können noch zugegen sein

C:   0,05 bis 25 Gew.Teile, insbesondere 0,1 bis 10 Gew.Teile.

## Komponente A

Als Komponente A der erfindungsgemäßen Formmasse kommen homopolymerisat oder Copolymerisate von Styrol mit einem der eng verwandten insbesondere methylsubstituierten Styrole in Frage, in denen ein Methylrest als Substituent am aromatischen Ring oder an der Seitenkette vorhanden ist. Hier ist vor allem p-Methylstyrol zu erwähnen. Diese Copolymerisate können aus Styrol bzw. substituiertem Styrol in an sich bekannter Weise hergestellt werden.

Als Styrolpolymerisate kommen ferner Pfropfmischpolymerisate in Frage, die durch Polymerisation von Styrol oder substituiertem Styrol in Gegenwart eines Kautschuks, z.B. eine Butadienpolymerisates oder kautschukartigen Styrol/Butadien-Polymerisats, hergestellt werden. Der Polybutadiengehalt kann 3 bis 20 Gew.%, vorzugsweise 4 bis 14 Gew.%, bezogen auf A, betragen. Der mit Styrol gepfropfte Kautschuk (Weichphase) liegt dabei dispergiert in einer als Hartmatrix bezeichneten Polystyrolphase vor.

Das schlagfeste Polystyrol kann auf bekannte Weise durch Polymerisation von Styrol bzw. einer styrolischen Kautschuk-Lösung in Masse, Lösung oder wäßriger Dispersion hergestellt werden. Vorzugsweise wird ein schlagfestes Polystyrol eingesetzt, das durch Masse- oder Lösungspolymerisation erhalten worden ist.

Polystyrole und Polymerisate substituierter Styrole sind, ebenso wie die schlagfesten Polystyrole, im Handel erhältlich. Die Viskositätzahl der Komponente A soll im Bereich von 60 bis 130 ml/g liegen.

## Komponente B

Die Komponente B stellt ein lineares aus Styrol und Butadien bestehendes, Blockcopolymerisat dar, das in an sich bekannter Weise selektiv hydriert worden ist, wobei lediglich die von Monomerenbaustein Butadien herrührenden Doppelbindungen zu mehr als 90 %, insbesondere mehr als 97 % abgesättigt werden. Derartige Verfahren zur Hydrierung sind an sich bekannt und können z.B. nach dem in DE-OS 27 48 884 beschriebenen Verfahren durchgeführt werden.

Wesentlich für den Aufbau des Blockcopolymerisates vor der Hydrierung ist, daß der Gesamtstyrolgehalt des Blockcopolymerisates im Bereich von 40 bis 60 Gew.%, vorzugsweise 50 bis 55 Gew.%, bezogen auf B, liegt und daß 5 bis 25 Gew.% des Blockcopolymerisates B als Blockpoly-styrol vorliegend und der Rest des Styrols in 60 bis 40 Gew.%, vorzugsweise 50 bis 45 Gew.% Butadien statistisch eingebaut vorliegt, wobei das Blockcopolymerisat B ein mittleres Molekulargewicht (Gewichtsmittel) von 50.000 bis 200.000, vorzugsweise 75.000 bis 150.000, aufweist.

Die Herstellung derartiger linearer Zwei-Blockcopolymerisate ist an sich bekannt und erfolgt durch anionische Polymerisation von Mischungen aus Butadien und Styrol in Gegenwart von Li-alkylinitiatoren und von THF. Sie können z.B. nach dem in der DE-OS 31 06 959 beschriebenen Verfahren hergestellt werden, wobei insbesondere adiabatisch in einer Verfahrens stufe gearbeitet wird.

## Komponente C

Die erfindungsgemäße Formmasse kann als Komponente C Zusatzstofe enthalten, die für die Komponenten A und typisch und gebräuchlich sind. Als solche Zusatzstoffe seien beispielsweise genannt: Füllstoffe, Farbstoffe, Pigmente, Antistati-ka, Antioxidantien, Flammschutzmittel und insbe-sondere die Schmiermittel und Entformungshilfs-mittel und Weiterverarbeitung der Formmasse, z.B. bei der Herstellung von Formkörpern bzw. Formteilen erforderlich sind. Meist werden die Zusatzstoffe mit der Komponente A oder B in die Formmasse eingebracht.

## Herstellung der Formmasse

Die Herstellung der Formmasse erfolgt durch Mischen der Komponenten A, B, und gegebenenfalls C nach allen bekannten Methoden. Vorzugsweise geschieht jedoch das Mischen der Komponenten A und B durch gemeinsames Extrudieren, Kneten oder Verwalzen der Komponenten bei höheren Temperaturen, z.B. in der Schmalze, in einem Ein- oder Zweiwellenextruder.

Die erfindungsgemäße Formmasse kann nach den bekannten Verfahren der Thermoplastverarbeitung bearbeitet werden, also z.B. durch Extrudieren, Spritzgießen, Kalandrieren, Hohlkörperblasen, Pressen oder Sintern: besonders bevorzugt werden aus den nach dem erfindungsgemäßen Verfahren hergestellten Formmassen Folien durch Extrusion hergestellt.

Die in der vorliegenden Anmeldung beschriebenen Parameter werden wie folgt bestimmt:

1.  Lochkerbschlagzähigkeit, LKSZ, nach DIN 53 753 [kJ/m$^2$]
2.  Steckspannung,SS, Reißfestigkeit, RF, Reißdehnung, RD, nach DIN 53 455 in [N/mm$^2$]

Für die Herstellung erfindungsgemäßer Formmassen und von Vergleichsmassen werden die nachfolgend beschriebenen Produkte verwendet.

## Komponente A

A   Ein mit medium-cis-Polybutadien des Mo-lekulargewichts 300.000 durch Lösungspo-lymerisation hergestelltes schlagfestes Po-lystyrol mit einem Polybutadiengehalt von 7,5 Gew.%, 6,9 Gew.% Paraffinöl, mittlere Teilchengröße der Weichphase 3 μm (Mittelwert: 50 Volumenprozent der als Weichphase vorliegenden Kautschukpartikel liegen oberhalb dieses Wertes und 50 Volumenprozent unterhalb dieses Wertes), Gelgehalt in Toluol 31,5 %, Quellungsindex in Toluol bei 12,5, enthaltend 0,11 Gew.% eines sterisch gehinderten Phenols als Antioxydans und 0.06 Gew.% Zinkstearat, VZ der Hartmatrix 70 ml/g.

## Komponente B

B$_1$   Ein selektiv hydriertes Styrol-Butadien-Blockcopolymerisat mit einem Gesamtstyrolgehalt von 53 Gew.% (Rest 47 Gew.% Butadien). Diese 53 Gew.% sind aufgeteilt in 10 Gew.% in Form von Blockpolystyrol und in 43 Gew.% in obengenannten 47 Gew.% Butadien statistisch verteilt. Es enthielt außerdem 0,16 Gew.% ®Irganox 1076, ein Octadecyl-3-(3,5-di-tert.-butyl-4-hydroxy-phenyl)-propionat und wurde im übrigen nach der Lehre der DE-OS 31 06 959, Beispiel 2, hergestellt. $\overline{M}_w$ = 100.000

B$_2$   Selektiv hydriertes Dreiblockcopolymeri-sat. Der Gesamtstyrolgehalt beträgt 28 Gew.%. Es weist außenliegenden gleich-lange Stryolblöcke auf. $\overline{M}_w$ = 110.000 (Handelsname: ®Kraton G 1650)

B$_3$   Selektiv hydriertes Dreiblockcopolymeri-sat. Der Gesamtstyrolgehalt beträgt 33 Gew.%. Es weist außenliegenden gleich-lange Styrolblöcke auf. $\overline{M}_w$ = 220.000 (Handelsname: ®Kraton G 1651)

B$_4$   Selektiv hydriertes Dreiblockcopolymeri-sat. Der Gesamtstyrolgehalt beträgt 29 Gew.%. Es weist außenliegenden gleich-lange Styrolblöcke auf. $\overline{M}_w$ = 80.000 (Handelsname: ®Kraton G 1651)

Die Erfindung wird durch die nachfolgenden Beispiele und Vergleichsversuche näher erläutert. Die darin genannten Teile und Prozente beziehen sich, sofern nicht anders angegeben, auf das Gewicht.

Beispiel und Vergleichsversuche I bis IV

Es wurden jeweils Mischungen aus 10 Teilen hydriertem Blockkautschuk (Komponente B1, B2, B3 oder B4) und 90 Teilen des beschriebenen schlagfesten Polystyrols (Komponent A) auf einem Weber-Extruder unter den nachfolgenden Bedingungen hergestellt:
Schnecke mit Mischtorpedo
2-Strangdüse
70 UPM
Kunststoff-Temperatur: 190˚ C
2 x Konfektioniert
In die Tabelle sind die an den Prüfkörpern gemessenen Werte verschiedener Parameter mit aufgenommen worden.

Tabelle

| | Beispiel | Vergleichs-versuch I | Vergleichs-versuch II | Vergleichs-versuch III | Vergleichs-versuch IV |
|---|---|---|---|---|---|
| Art des hydrierten Blockkautschuks | B1 | kein Zusatz | B2 | B3 | B4 |
| Lochkerbschlagzähigkeit (kJ/m²) | 32,3 | 20,1 | 25,0 | 25,2 | 27,1 |
| Streckspannung (N/mm²) | 19,3 | 19,2 | 17,6 | 17,3 | 17,3 |
| Reißfestigkeit (N/mm²) | 18,7 | 20,4 | 18,4 | 17,6 | 18,5 |
| Reißdehnung (%) | 51,4 | 47,4 | 47,7 | 39,7 | 44,0 |

## Patentansprüche

1.  Thermoplastische Formmasse, enthaltend, jeweils bezogen auf die Formmasse aus A + B

A    98 bis 80 Gew.% mindestens eines Styrol oder eines substituiertes Styrol enthaltenden Polymerisates

B    2 bis 20 Gew.% mindestens eines linearen, hydrierten Styrol und Butadien enthaltenden Blockcopolymerisates

dadurch gekennzeichnet, daß der Gesamtstyrolgehalt des Blockcopolymerisates B im Bereich von 40 bis 60 Gew.%, bezogen auf B, liegt und daß 5 bis 25 Gew.% der Blockcopolymerisates B als Blockpolystyrol vorliegen und der Rest des Styrols in 60 bis 40 Gew.% hydriertes Butadien statistisch eingebaut vorliegt, wobei das Blockcopolymerisat B ein mittleres Molekulargewicht (Gewichtsmittel) von 50.000 bis 200.000 aufweist.

2.    Thermoplastische Formmasse nach Anspruch 1, bestehend aus den Komponenten A und B.

3.    Thermoplastic Formmasse nach Anspruch 1, enthaltend, jeweils bezogen auf die Formasse aus A + B,

A    96 bis 86 Gew.% mindestens eines Styrols oder eines substituiertes Styrol enthaltend Polymerisates

B    4 bis 14 Gew.% mindestens eines linearen, hydrierten Styrol und Butadien enthaltenden Blockcopolymerisates

dadurch gekennzeichnet, daß der Gesamtstyrolgehalt des Blockcopolymerisates B im Bereich von 40 bis 60 Gew.%, bezogen auf B, liegt und daß 5 bis 25 Gew.% der Blockcopolymerisates B als Blockpolystyrol vorliegen und der Rest des Styrols in 60 bis 40 Gew.% hydriertes Butadien statistisch eingebaut vorliegt, wobei das Blockcopolymerisat B ein mittleres Molekulargewicht (Gewichtsmittel) von 50.000 bis 200.000 aufweist.

4.    Thermoplastic Formmasse nach Anspruch 1, enthaltend, jeweils bezogen auf die Formmasse aus A + B,

A    98 bis 80 Gew.% eines schlagfesten Polystyrols, das 3 bis 20 Gew.%, bezogen auf A, Polybutadien (gepfropft mit Styrol) aufweist,

B    2 bis 20 Gew.% mindestens eines linearen, hydrierten Styrol und Butadien enthaltenden Blockcopolymerisates

dadurch gekennzeichnet, daß der Gesamtstyrolgehalt des Blockcopolymerisates B im Bereich von 40 bis 60 Gew.%, bezogen auf B, liegt und daß 5 bis 25 Gew.% der Blockcopolymerisates B als Blockpolystyrol vorliegen und der Rest des Styrols in 60 bis 40 Gew.% hydriertes Butadien statistisch eingebaut vorliegt, wobei das Blockcopolymerisat B ein mittleres Molekulargewicht (Gewichtsmittel) von 50.000 bis 200.000 aufweist.

5.    Thermoplastische Formmasse nach Anspruch 3 und 4, dadurch gekennzeichnet, daß der Gesamtstyrolgehalt des Blockpolymerisates B im Bereich von 50 bis 55 Gew.%, bezogen auf B, liegt und daß 5 bis 25 Gew.% des Blockcopolymerisates B als Blockpolystyrol vorliegen und der Rest des Styrols in 50 bis 45 Gew.% hydriertes Butadien statistisch eingebaut vorliegt und wobei das Blockcopolymerisat B ein mittleres Molekulargewicht (Gewichtsmittel) von 75.000 bis 150.000 aufweist.

6.    Thermoplastic Formmasse nach Anspruch 1, enthaltend, bezogen auf 100 Teile A + B, 0,05 bis 25 Gew.Teile übliche Zusatzstoffe C.

7.    Verwendung der thermoplastischen Formmasse gemäß Anspruch 1 zur Herstellung von Formteilen.

## Claims

1.    A thermoplastic molding composition containing, in each case based on the molding composition comprising A + B,
    A    from 98 to 80% by weight of at least one polymer containing styrene or a substituted styrene, and
    B    from 2 to 20% by weight of at least one block copolymer containing linear, hydrogenated styrene and butadiene,
    wherein the total styrene content of the block copolymer B is in the range from 40 to 60% by weight, based on B, and wherein from 5 to 25% by weight of the block copolymer B is in the form of block polystyrene and the remainder of the styrene is incorporated randomly into from 60 to 40% by weight of hydrogenated butadiene, the block copolymer B having a mean molecular weight (weight average) of from 50,000 to 200,000.

2.    A thermoplastic molding composition as claimed in claim 1, comprising components A and B.

3. A thermoplastic molding composition as claimed in claim 1, containing, in each case based on the molding composition comprising A + B,

A from 96 to 86% by weight of at least one polymer containing styrene or a substituted styrene, and

B from 4 to 14% by weight of at least one block copolymer containing linear, hydrogenated styrene and butadiene,

wherein the total styrene content of the block copolymer B is in the range from 40 to 60% by weight, based on B, and wherein from 5 to 25% by weight of the block copolymer B is in the form of block polystyrene and the remainder of the styrene is incorporated randomly into from 60 to 40% by weight of hydrogenated butadiene, the block copolymer B having a mean molecular weight (weight average) of from 50,000 to 200,000.

4. A thermoplastic molding composition as claimed in claim 1, containing, in each case based on the molding composition comprising A + B,

A from 98 to 80% by weight of an impact-resistant polystyrene containing from 3 to 20% by weight, based on A, of polybutadiene (grafted with styrene), and

B from 2 to 20% by weight of at least one block copolymer containing linear, hydrogenated styrene and butadiene,

wherein the total styrene content of the block copolymer B is in the range from 40 to 60% by weight, based on B, and wherein from 5 to 25% by weight of the block copolymer B is in the form of block polystyrene and the remainder of the styrene is incorporated randomly into from 60 to 40% by weight of hydrogenated butadiene, the block copolymer B having a mean molecular weight (weight average) of from 50,000 to 200,000.

5. A thermoplastic molding composition as claimed in claim 3 or 4, wherein the total styrene content of the block copolymer B is in the range from 50 to 55% by weight, based on B, and wherein from 5 to 25% by weight of the block copolymer B is in the form of block polystyrene and the remainder of the styrene is incorporated randomly into from 50 to 45% by weight of hydrogenated butadiene, the block copolymer B having a mean molecular weight (weight average) of from 75,000 to 150,000.

6. A thermoplastic molding composition as claimed in claim 1, containing, based on 100 parts of A + B, from 0.05 to 25 parts by weight of conventional additives C.

7. The use of a thermoplastic molding composition as claimed in claim 1 for the production of moldings.

**Revendications**

1. Masses à mouler thermoplastiques, contenant à chaque fois par rapport à la masse à mouler constituée de A + B,

A de 98 à 80% en poids d'au moins un styrène ou d'un polymère contenant un styrène substitué

B de 2 à 20% en poids d'au moins un copolymère séquencé hydrogéné linéaire contenant du styrène et du butadiène

caractérisées en ce que la teneur totale en styrène du copolymère séquencé B est comprise entre 40 et 60% en poids par rapport à B et en ce que de 5 à 25% en poids du copolymère séquencé B se trouve sous forme de polystyrène séquencé et le reste du styrène se trouve incorporé de façon statistique dans 60 à 40% en poids de butadiène hydrogéné, le copolymère séquencé B présentant un poids moléculaire moyen (moyenne en poids) de 50 000 à 200 000.

2. Masses à mouler thermoplastiques selon la revendication 1, constituées des composants A et B.

3. Masses à mouler thermoplastiques selon la revendication 1, contenant, à chaque fois par rapport à la masse à mouler constituée de A + B,

A de 96 à 86% en poids d'au moins un styrène ou d'un polymère contenant un styrène substitué

B de 4 à 14% en poids d'au moins un copolymère séquencé hydrogéné linéaire contenant du styrène et du butadiène

caractérisées en ce que la teneur totale en styrène du copolymère séquencé B est comprise entre 40 et 60% en poids par rapport à B et en ce que de 5 à 25% en poids du copolymère séquencé B se présente sous forme de polystyrène séquencé et le reste du styrène est incorporé de manière statistique dans 60 à 40% en poids de butadiène hydrogéné, le copolymère séquencé B présentant un poids moléculaire moyen (moyenne en poids) de 50 000 à 200 000.

4. Masses à mouler thermoplastiques selon la revendication 1, contenant, par rapport à la masse à mouler constituée de A + B,

A de 98 à 80% en poids d'un polystyrène résistant aux chocs qui contient de 3 à 20% en poids, par rapport à A, de polybutadiène (greffé avec du styrène),

B de 2 à 20% en poids au moins d'un copolymère séquencé hydrogéné linéaire contenant du styrène et du butadiène

caractérisées en ce que la teneur totale en styrène du copolymère séquencé B est comprise entre 40 et 60% en poids par rapport à B et en ce que de 5 à 25% en poids du copolymère séquencé se trouve sous forme de polystyrène séquencé et le reste du styrène est incorporé de façon statistique dans 60 à 40% en poids de butadiène hydrogéné, le copolymère séquencé B présentant un poids moléculaire moyen (moyenne en poids) de 50 000 à 200 000.

5. Masses à mouler thermoplastiques selon les revendications 3 et 4, caractérisées en ce que la teneur totale en styrène du copolymère séquencé B est comprise entre 50 et 55% en poids, par rapport à B, et en ce que de 5 à 25% en poids du copolymère séquencé B se trouve sous forme de polystyrène séquencé et le reste du styrène est incorporé de manière statistique dans 50 à 45% en poids du butadiène hydrogéné, le copolymère séquencé B présentant un poids moléculaire moyen (moyenne en poids) de 75 000 à 150 000.

6. Masses à mouler thermoplastiques selon la revendication 1, contenant par rapport à 100 parties de A + B, de 0,05 à 25 parties en poids d'additifs usuels C.

7. Utilisation des masses à mouler thermoplastiques selon la revendication 1 pour la préparation de pièces moulées.